(19) **Europäisches Patentamt**
**European Patent Office**
**Office européen des brevets**

(11) **EP 2 561 319 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(51) Int Cl.:
**G01B 7/00** (2006.01) **G01D 5/245** (2006.01)
**G01D 5/249** (2006.01) **G01D 5/347** (2006.01)

(21) Anmeldenummer: **10716812.2**

(86) Internationale Anmeldenummer:
**PCT/EP2010/055220**

(22) Anmeldetag: **20.04.2010**

(87) Internationale Veröffentlichungsnummer:
**WO 2011/131232 (27.10.2011 Gazette 2011/43)**

(54) **POSITIONSERFASSUNGSVORRICHTUNG UND VERFAHREN ZUR HERSTELLUNG EINER MARKIERUNGSANORDNUNG FÜR EINE POSITIONSERFASSUNGSVORRICHTUNG**

POSITION DETECTING DEVICE AND METHOD FOR PRODUCING A MARKING ARRANGEMENT FOR A POSITION DETECTING DEVICE

DISPOSITIF DE DÉTECTION DE POSITION ET PROCÉDÉ DE FABRICATION D'UN AGENCEMENT DE MARQUAGE POUR UN DISPOSITIF DE DÉTECTION DE POSITION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**27.02.2013 Patentblatt 2013/09**

(73) Patentinhaber: **Hamilton Bonaduz AG**
**7402 Bonaduz (CH)**

(72) Erfinder:
• **KIRSTE, Vinzenz**
**DE- 55270 Zornheim (CH)**

• **KÖPPEL, Gian, Claudio**
**CH-7203 Trimmis (CH)**

(74) Vertreter: **Trossin, Hans-Jürgen et al**
**Weickmann & Weickmann**
**Postfach 860 820**
**81635 München (DE)**

(56) Entgegenhaltungen:
**WO-A2-91/10288      DE-A1- 3 942 625**
**DE-A1-102008 020 110**

EP 2 561 319 B1

## Beschreibung

Die vorliegende Erfindung betrifft eine Positionserfassungsvorrichtung zur Erfassung einer Positionsbeziehung zwischen einem ersten Bauteil und einem zweiten Bauteil, umfassend eine Markierungsanordnung, welche an dem ersten Bauteil vorgesehen ist und eine Absolutspur sowie eine Inkrementalspur aufweist, wobei die Absolutspur eine Mehrzahl von Absolutmarkierungen aufweist, aus denen eine binäre Absolutcodesequenz auslesbar ist, und wobei die Inkrementalspur eine Mehrzahl von den Absolutmarkierungen zugeordneten Inkrementalmarkierungen aufweist, aus denen eine alternierende Inkrementalsequenz auslesbar ist, und eine Sensoranordnung, welche an dem zweiten Bauteil vorgesehen ist und dafür eingerichtet ist, die Absolutmarkierungen und die Inkrementalmarkierungen abzutasten. Ferner betrifft die Erfindung ein Verfahren zur Herstellung einer Markierungsanordnung für eine Positionserfassungsvorrichtung sowie eine Positionserfassungsvorrichtung mit einer durch ein solches Verfahren hergestellten Markierungsanordnung.

Positionserfassungsvorrichtungen und -verfahren der vorstehend genannten Art kommen im Stand der Technik zum Beispiel in Maschinen und Anlagen zum Einsatz, in denen zwei Bauteile zueinander verschiebbar oder verdrehbar angeordnet sind und eine Information über das Ausmaß der gegenseitigen Verschiebung bzw. Verdrehung der beiden Bauteile erfasst werden soll. Dabei kann es sich bei einer Verschiebung der Bauteile um eine Wegstrecke entlang eines linearen oder gekrümmten Verschiebungswegs handeln oder im Falle einer Drehbewegung der beiden Bauteile um einen Drehwinkel oder um eine Bogenlänge entlang einer Kreisbahn. Aus den Absolutmarkierungen kann die Sensoranordnung bekannter Positionserfassungsvorrichtungen an jeder Stelle der Markierungsanordnung eine Information über das absolute Maß der Verschiebung oder Verdrehung der beiden Bauteile (eine Absolutposition) auslesen, wobei die Genauigkeit der Absolutinformation auf den Abstand zwischen zwei benachbarten Absolutmarkierungen begrenzt ist. Zur genauen Erfassung der Positionsbeziehung tastet die Sensoranordnung zusätzlich die alternierende Inkrementalsequenz der Inkrementalmarkierungen ab und ermittelt eine Relativposition zwischen zwei benachbarten Inkrementalmarkierungen. Aus einer Kombination der Relativposition und der Absolutposition kann die exakte Positionsbeziehung der beiden Bauteile zueinander ermittelt werden.

Für bekannte Positionserfassungsvorrichtungen werden häufig Markierungsanordnungen und Sensoranordnungen auf Basis der Erfassung magnetischer Felder eingesetzt. Dabei können die Absolutspur sowie die Inkrementalspur jeweils durch ein magnetisiertes Band entlang der Bewegungsrichtung der beiden Bauteile ausgebildet sein, wobei jedes Band eine Mehrzahl von in gleichen Abständen entlang der Laufrichtung des Bandes angeordneten magnetischen Polen umfasst, an denen das Band in einer Richtung senkrecht zur Oberfläche des Bandes magnetisiert ist, wobei der Richtungssinn der Magnetisierung den Binärwert des jeweiligen Pols kodiert. Eine an dem Band vorbeigeführte Magnetsensoranordnung des anderen Bauteils kann dann die Magnetisierung der einzelnen Pole auslesen und beispielsweise einen erfassten Nordpol als Signal "1" erkennen und einen erfassten Südpol als Signal "0" erkennen.

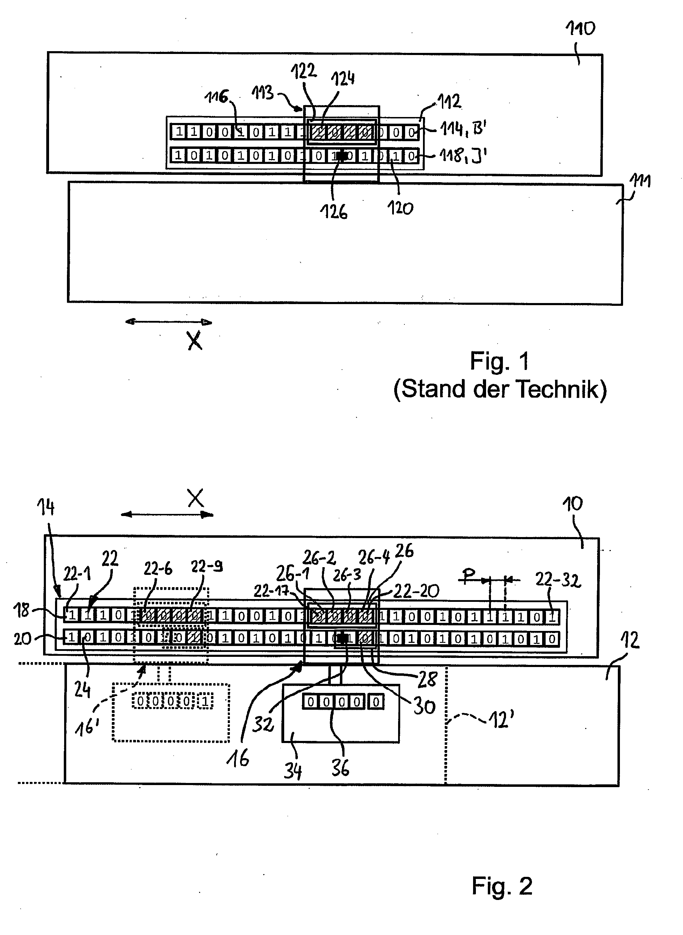

Figur 1 zeigt schematisch eine Positionserfassungsvorrichtung des Stands der Technik zur Erfassung einer Positionsbeziehung zwischen einem ersten Bauteil 110 und einem zweiten Bauteil 111, welche zueinander entlang eines Verschiebungswegs X linear verschiebbar sind. Die Positionserfassungsvorrichtung umfasst eine an dem ersten Bauteil 110 angebrachte Markierungsanordnung 112 sowie eine an dem zweiten Bauteil 111 befestigte und die Markierungsanordnung 112 auslesende Sensoranordnung 113 umfasst. Die Markierungsanordnung 112 weist eine Absolutspur 114 mit einer Mehrzahl von Absolutmarkierungen 116 auf, welche eine binäre Absolutcodesequenz B' = {1,1,0,0,1,0,1,1,1,1,0,1,0,0,0,0} kodiert. Zur Markierungsanordnung 112 gehört ferner eine Inkrementalspur 118 mit einer Mehrzahl von Inkrementalmarkierungen 120, die eine alternierende Inkrementalsequenz I' = {1,0,1,0,1,0,1,0,1,0,1,0,1,0} kodiert. Absolutspur 114 und Inkrementalspur 118 verlaufen zueinander parallel und ihre jeweils aufeinanderfolgenden Markierungen 116, 120 haben voneinander jeweils gleiche Abstände.

Die Sensoreinheit 113 umfasst ein Absolutsensor-Array 122 mit vier Absolutsensoren 124, welche eine Abfolge von vier aufeinanderfolgenden Absolutmarkierungen 114 gleichzeitig auslesen können. Ferner ist in der Sensoreinheit 113 ein Inkrementalsensor 126 vorgesehen, welcher die Inkrementalmarkierung 120 erfasst und ein Signal entsprechend einer Position zwischen zwei benachbarten Inkrementalmarkierungen 120 liefert.

Die Absolutcodesequenz B' der Absolutspur 114 ist auf Basis einer De-Brujin-Sequenz der Ordnung 4 kodiert.

Unter einer De-Brujin-Sequenz der Ordnung N wird eine zyklische Sequenz von Zeichen eines vorgegebenen Zeichensatzes A verstanden, in welcher jede aus dem Zeichensatz A erhältliche Untersequenz der Länge N genau einmal enthalten ist. Das Lesen von Untersequenzen für den Zweck dieser Definition erfolgt dabei unter der Maßgabe, dass auf das letzte Zeichen der De-Brujin-Sequenz wieder das erste Zeichen der De-Brujin-Sequenz folgt. Dementsprechend äußert sich die zyklische Eigenschaft der De-Brujin-Sequenz darin, dass die Sequenz an jeder beliebigen Stelle in zwei Teilsequenzen aufgetrennt werden kann, wobei nach dem Vertauschen der beiden Teilsequenzen (Anfügen der ersten Teilsequenz nach dem Ende der zweiten Teilsequenz) wieder eine De-Bruin-Sequenz der Ordnung N gemäß der vorstehenden Definition erhalten wird. Mit anderen Worten kann die De-Brujin-Sequenz zyklisch nach rechts oder nach links verschoben werden, wobei bei jeder Verschiebung um eine Stelle ein an einem Ende der De-Brujin-Sequenz angeordnetes Zeichen entfernt und am gegenüberliegenden Ende der De-Brujin-Sequenz angefügt wird (zyklische Verschiebung um eine Stelle). Bei jeder zyklischen Verschiebung der De-Brujin-Sequenz entsteht wiederum eine De-Brujin-Sequenz der gleichen Ordnung N.

Für den vorliegenden Anwendungsfall von Markierungsanordnungen mit binärer Absolutcodesequenz sind die Brujin-Sequenzen mit binärem Zeichensatz von Interesse, bei welchen jeder Stelle der De-Brujin-Sequenz, d. h. jeder Markierung, entweder der Wert "0" oder der Wert "1" zugeordnet ist.

Binäre De-Brujin-Sequenzen der Ordnung N weisen eine Stellenanzahl von $2^N$ auf, so dass die Länge L einer so gebildeten Absolutspur gegeben ist durch

$$L = p \cdot 2^N,$$

wobei p die Polteilung angibt, d.h. den Abstand entlang der Absolutspur zwischen zwei benachbarten Absolutmarkierungen. Mit einer Sensoreinheit zur Erfassung von N aufeinanderfolgenden Absolutmarkierungen kann somit eine Absolutspur abgetastet werden, deren Absolutmarkierungen eine De-Brujin-Sequenz der Ordnung N codieren, wobei die dann von der Positionserfassungsvorrichtung maximal erfassbare Verschiebung zwischen den beiden Bauteilen durch die wie vorstehend zu berechnende Länge L der Absolutspur gegeben ist.

Um die von einer bekannten Positionserfassungsvorrichtung erfassbare maximale Wegstrecke der Relativbewegung zwischen den beiden Bauteilen zu vergrößern, könnte daran gedacht werden, die Ordnung N der in der Absolutspur gespeicherten De-Brujin-Sequenz zu erhöhen, um die Länge L der Absolutspur gemäß der vorstehend genannten Gleichung zu erhöhen. Dies würde jedoch die Länge der Sensoranordnung in Richtung des Verschiebungswegs vergrößern, da nach dem herkömmlichen Erfassungsprinzip die Sensoranordnung für die Abtastung von N aufeinanderfolgenden Absolutmarkierungen eingerichtet sein muss. Alternativ könnte daran gedacht werden, den Abstand zwischen aufeinanderfolgenden Markierungen (Polteilung p) zu vergrößern. Auch in diesem Fall müsste zumindest der Bauraum der Sensoranordnung entsprechend vergrößert werden, um N aufeinanderfolgende Absolutmarkierungen auslesen zu können, und zum anderen würde bei einer solchen Lösung die Genauigkeit der Erfassung der Relativposition auf Grundlage der Inkrementalmarkierungen verringert werden.

Aufgabe der vorliegenden Erfindung ist es daher, eine Positionserfassungsvorrichtüng zur Erfassung einer Positionsbeziehung zwischen zwei Bauteilen sowie ein Verfahren zur Herstellung e'iner Markierungsanordnung für eine Positionserfassungsvorrichtung bereitzustellen, mit welchen eine Positionsbeziehung zwischen zwei zueinander beweglich angeordneten Bauteilen über eine größere Gesamtwegstrecke hinweg erfasst werden kann, ohne signifikante Nachteile im Hinblick auf die Kosten und den Bauraum der Positionserfassungsvorrichtung oder im Hinblick auf die Genauigkeit der Erfassung in Kauf nehmen zu müssen.

Nach einem ersten Aspekt der vorliegenden Erfindung wird die Erfindungsaufgabe gelöst durch eine Positionserfassungsvorrichtung zur Erfassung einer Positionsbeziehung zwischen einem ersten Bauteil und einem zweiten Bauteil, umfassend eine Markierungsanordnung, welche an dem ersten Bauteil vorgesehen ist und eine Absolutspur sowie eine Inkrementalspur aufweist, wobei die Absolutspur eine Mehrzahl von Absolutmarkierungen aufweist, aus denen eine binäre Absolutcodesequenz auslesbar ist, und wobei die Inkrementalspur eine Mehrzahl von den Absolutmarkierungen zugeordneten Inkrementalmarkierungen aufweist, aus denen eine alternierende Inkrementalsequenz auslesbar ist, und eine Sensoranordnung, welche an dem zweiten Bauteil vorgesehen ist und dafür eingerichtet ist, die Absolutmarkierungen und die Inkrementalmarkierungen abzutasten, wobei die Absolutcodesequenz aus einer ersten und einer zweiten De-Brujin-Sequenz der Ordnung N gebildet ist, welche aufeinanderfolgen, wobei die zweite De-Brujin-Sequenz eine zyklische Verschiebung der ersten De-Brujin-Sequenz ist und wobei die erste De-Brujin-Sequenz mit einer ersten Untersequenz der Länge N-1 endet und eine zur ersten Untersequenz identische, zweite Untersequenz der Länge N-1 enthält, welche zur ersten Untersequenz um eine ungerade Stellenanzahl versetzt ist, und wobei die zweite De-Brujin-Sequenz gegenüber der ersten De-Brujin-Sequenz zyklisch so verschoben ist, dass sie mit der zweiten Untersequenz endet.

Nach einem wichtigen Merkmal der Erfindung ist die Absolutcodesequenz der Absolutspur aus einer Verkettung zweier De-Brujin-Sequenzen der Ordnung N gebildet, wobei die beiden De-Brujin-Sequenzen zueinander in vorbestimmter Weise zyklisch verschoben sind. Wenn die beiden miteinander verketteten De-Brujin-Sequenzen den vorstehend genannten, erfindungsgemäßen Bedingungen genügen, so entsteht bei ihrer Verkettung eine Absolutcodesequenz, in welcher jede binäre Sequenz der Länge N an genau zwei Stellen auftritt, die voneinander um eine ungerade Stellenanzahl versetzt liegen, wobei für das erste Auftreten der Sequenz die alternierende Inkrementalsequenz einen anderen Wert zeigt als für das zweite Auftreten der Sequenz.

Durch eine Kombination der N ausgelesenen Absolutmarkierungen und eines erfassten Binärwerts der Inkrementalmarkierung kann somit die ausgelesene Sequenz der Länge N eindeutig identifiziert werden und die Absolutposition des ersten Bauteils gegenüber dem zweiten Bauteil kann über die gesamte Länge der Absolutcodesequenz hinweg eindeutig bestimmt werden. Da die erfindungsgemäße Absolutcodesequenz, aus zwei verketteten De-Brujin-Sequenzen der Ordnung N gebildet ist, beträgt die Gesamtlänge der abtastbaren Wegstrecke das Zweifache der mit einer Markierungsanordnung des Stands der Technik erfassbaren Wegstrecke. Die erfindungsgemäße Positionserfassungsvorrichtung kann somit mit einer Sensoranordnung, die zur Erfassung von N aufeinanderfolgenden Absolutmarkierungen ausgelegt ist (z. B. mit N Sensoren für

Absolutmarkierungen ausgestattet ist), eine Gesamtwegstrecke abfahren, deren Länge

$$L = p \cdot 2^{N+1}$$

beträgt. Erforderlich ist dazu zwar die Fähigkeit der Sensoranordnung zur Erfassung eines Binärwerts der Inkrementalspur. Die dazu gegebenenfalls erforderlichen technischen Maßnahmen können jedoch zumindest ohne Verlängerung der Sensoranordnung in Richtung des Verschiebungswegs erfolgen, so dass insoweit eine Vergrößerung des Bauraums und der Kosten der Vorrichtung vermieden werden kann.

In einer bevorzugten Ausführungsform der Erfindung weist die Positionserfassungsvorrichtung eine elektronische Kontrolleinrichtung auf, welche mit der Sensoranordnung in Verbindung steht, um ein erstes Sensorsignal entsprechend einer Abtastung der Absolutspur, ein zweites Sensorsignal entsprechend einer Abtastung der Inkrementalspur und ein drittes Sensorsignal entsprechend einer erfassten Relativposition zwischen zwei aufeinanderfolgenden Inkrementalmarkierungen zu empfangen, und welche dafür eingerichtet ist, die Positionsbeziehung zwischen den Bauteilen auf Grundlage des ersten Sensorsignals, des zweiten Sensorsignals und des dritten Sensorsignals zu bestimmen. In einer solchen Ausführungsform wird aus der Inkrementalspur somit nicht nur die binäre Information zur eindeutigen Identifikation der aus der Absolutspur ausgelesenen Sequenz gewonnen, sondern auch eine Information über eine exakte Relativposition der Sensoranordnung zwischen zwei aufeinanderfolgenden Markierungen. Die erfindungsgemäße Verdopplung der maximal abtastbaren Wegstrecke kann somit ohne Einbußen hinsichtlich der Genauigkeit der Positionserfassung erreicht werden.

Mehrere der genannten Sensorsignale könnten auch von ein und demselben Sensor stammen. Insbesondere das zweite und das dritte Sensorsignal, welche beide von einer Abtastung der Inkrementalspur stammen, könnten aus dem Signal eines Inkrementalsensors abgeleitet werden (zum Beispiel jeweils als Vorzeichenanteil (Binärwert) und als Betragsanteil).

In einer konstruktiv besonders einfachen Realisierung der zuletzt genannten Ausführungsform kann vorgesehen sein, dass die elektronische Kontrolleinrichtung eine Speichereinrichtung umfasst, in welcher ein durch N+1 Bits gebildeter Absolutpositionswert gespeichert ist, wobei die elektronische Kontrolleinrichtung N Bits des Absolutpositionswerts nach Maßgabe des ersten Sensorsignals setzt und ein Bit des Absolutpositionswerts nach Maßgabe des zweiten Sensorsignals setzt. Eine derartige elektronische Kontrolleinrichtung stellt den Absolutanteil der erfassten Positionsbeziehung zwischen den Bauteilen, die Absolutposition, als N+1-Bit-Wert besonders schnell und zuverlässig ohne zwischengeschaltete Auswertungsalgorithmen bereit, so dass die notwendigen elektronischen Schaltmittel vereinfacht werden können und die Positionserfassungsvorrichtung auch bei hohen Relativgeschwindigkeiten zwischen den beiden Bauteilen zuverlässig arbeitet.

Prinzipiell könnte die Sensoranordnung zur Erfassung von mehr als N Absolutmarkierungen eingerichtet sein oder/und nicht aufeinanderfolgende Absolutmarkierungen erfassen, beispielsweise um zusätzlich Redundanz bei der Positionserfassung zu ermöglichen. Die erfindungsgemäßen Vorteile eines verkleinerten Bauraums der Sensoranordnung und einer besonders kostengünstigen Konstruktion ergeben sich jedoch insbesondere dann, wenn die Sensoranordnung zur Erfassung von genau N aufeinanderfolgenden Absolutmarkierungen eingerichtet ist. So kann die Länge der Sensoranordnung in Richtung parallel zur Absolutspur bzw. zur Inkrementalspur beispielsweise gerade so lang sein, dass die Sensoranordnung genau N aufeinanderfolgende Absolutmarkierungen abdeckt, oder/und es könnten genau N Sensoren zur Erfassung jeweils einer Absolutmarkierung vorhanden sein.

Anzumerken ist, dass wenn hierin von einer Erfassung von mehreren (insbesondere N) Absolutmarkierungen durch die Sensoranordnung die Rede ist, die Erfassung dieser Markierungen innerhalb eines Zeitfensters gemeint ist, in welchem sich die beiden Bauteile zumindest im Bereich der Polteilung in einer bestimmten Positionsbeziehung zueinander befinden. Zumeist wird die Sensoranordnung dazu eingerichtet sein, die mehreren Absolutmarkierungen gleichzeitig zu erfassen (zum Beispiel mittels mehrerer Sensoren).

In einer erfindungsgemäßen Positionserfassungsvorrichtung basiert die Abtastung der Markierungsanordnung vorzugsweise auf einer magnetischen Wechselwirkung zwischen der Sensoranordnung und den Absolutmarkierungen oder/und den Inkrementalmarkierungen. So kann die Absolutspur oder/und die Inkrementalspur ein magnetisiertes Band sein, dessen Magnetisierung senkrecht zur Oberfläche des Bandes gerichtet ist, wobei die Absolutmarkierungen bzw. die Inkrementalmarkierungen durch eine Abfolge von Polen mit gerichteter Magnetisierung gebildet sind. Beispielsweise kann ein Nordpol einen Binärwert "1" kodieren und ein Südpol kann einen Binärwert "0" kodieren. Die Sensoranordnung kann dann ein Magnetfeldsensor-Array mit mehreren Magnetfeldsensoren umfassen (z. B. Hall-Sensoren in einem Hall-Array). Alternativ könnte die Markierungsanordnung eine optisch abtastbare Markierung umfassen und die Sensoranordnung könnte optische Sensoren aufweisen, beispielsweise reflektiertes Licht eines Abtastlasers detektieren.

Die Positionserfassungsvorrichtung der Erfindung kann zur Erfassung einer linearen Verschiebungsposition zwischen zwei linear verschiebbaren Bauteilen eingerichtet sein, beispielsweise in einer Linearführung zwischen einer statischen Schiene und einem darauf linear beweglichen Schlitten. In diesem Fall können die Absolutspur sowie die Inkrementalspur parallel zum Verschiebungsweg verlaufen.

Alternativ ist eine Positionserfassungsvorrichtung der Erfindung für die Erfassung einer Drehposition zwischen zwei zueinander drehbar eingerichteten Bauteilen einsetzbar, wobei die Markierungsanordnung dann an einem Abschnitt des ersten Bauteils angeordnet sein kann, der sich entlang einer Kreisbahn gegenüber der Sensoranordnung des zweiten Bauteils bewegt, so dass die Absolutspur und die Inkrementalspur jeweils einen gekrümmten Verlauf haben.

Wenn die Positionserfassungsvorrichtung zur Erfassung einer Drehposition zwischen den Bauteilen eingerichtet ist, so kann in einer besonders bevorzugten Variante der Erfindung die Absolutspur und die Inkrementalspur eine Drehachse der Bauteile umlaufen, wobei ein Anfang der zweiten De-Bruijn-Sequenz an ein Ende der ersten De-Bruijn-Sequenz angrenzt und ein Anfang der ersten De-Bruijn-Sequenz an ein Ende der zweiten De-Bruijn-Sequenz angrenzt. In einer solchen Variante wird die zyklische Eigenschaft der Absolutspur sowie der Inkrementalspur besonders vorteilhaft ausgenutzt, um die Drehposition zwischen den Bauteilen um volle 360° zuverlässig zu erfassen. Die Absolutspur sowie die Inkrementalspur umlaufen die Drehachse der Bauteile dann ringförmig und endlos, so dass jede Sequenz der Länge N entlang des Umfangs um die Drehachse genau zweimal in der Absolutspur auftritt, jeweils für verschiedene Werte der Inkrementalspur.

Nach einem zweiten Aspekt wird die vorstehende Erfindungsaufgabe gelöst durch ein Verfahren zur Herstellung einer Markierungsanordnung für eine Positionserfassungsvorrichtung zur Erfassung einer Positionsbeziehung zwischen einem ersten Bauteil und einem zweiten Bauteil, wobei die Positionserfassungsvorrichtung eine Sensoranordnung zum Abtasten der Markierungsanordnung aufweist, insbesondere für eine Positionserfassungsvorrichtung nach einem der vorhergehenden Ansprüche, wobei das Verfahren die Schritte umfasst:

- Bereitstellen einer Initial-De-Bruijn-Sequenz der Ordnung N,
- Identifizieren einer ersten Untersequenz der Länge N-1 und einer zweiten Untersequenz der Länge N-1, welche einander identisch sind und innerhalb der Initial-De-Bruijn-Sequenz um eine ungerade Stellenanzahl zueinander versetzt auftreten,
- Bereitstellen einer ersten De-Bruijn-Sequenz der Ordnung N durch zyklisches Verschieben der Initial-De-Bruijn-Sequenz, so dass die erste De-Bruijn-Sequenz mit der ersten Untersequenz endet,
- Bereitstellen einer zweiten De-Bruijn-Sequenz der Ordnung N durch zyklisches Verschieben der Initial-De-Bruijn-Sequenz, so dass die zweite De-Bruijn-Sequenz mit der zweiten Untersequenz endet,
- Bereitstellen einer Absolutcodesequenz durch Verketten der ersten De-Bruijn-Sequenz und der zweiten De-Bruijn-Sequenz,
- Bereitstellen einer Absolutspur aus einer Mehrzahl von die Absolutcodesequenz codierenden Absolutmarkierungen, und
- Bereitstellen einer Inkrementalspur aus einer Mehrzahl von den Absolutmarkierungen zugeordneten Inkrementalmarkierungen, welche eine alternierende Inkrementalsequenz codieren.

Mit einem Verfahren des zweiten Aspekts der Erfindung kann eine Markierungsanordnung mit zwei verketteten De-Brujin-Sequenzen der Ordnung N als Absolutcodesequenz einer Absolutspur bereitgestellt werden, wobei die beschriebenen Verfahrensschritte besonders gut für die automatische Verarbeitung geeignet sind, so dass Markierungsanordnungen größerer Länge, d. h. mit De-Brujin-Sequenzen höherer Ordnung, mit einfachen technischen Mitteln gefertigt werden können. Die dabei erhaltenen Absolutcodesequenzen erlauben die Kodierung einer maximalen Wegstrecke zwischen den Bauteilen von

$$L = p \cdot 2^{N+1}$$

unter Verwendung einer Sensoranordnung, welche N aufeinanderfolgende Absolutmarkierungen abtastet, so dass mit der erfindungsgemäß hergestellten Markierungsanordnung ebenfalls eine Verdopplung der maximal möglichen Wegstrecke erreicht werden kann, ohne dass dazu z. B. eine Verlängerung der Sensoranordnung entlang der Wegstrecke in Kauf zu nehmen wäre. Mit dem Verfahren des zweiten Aspekts der Erfindung kann insbesondere eine Markierungsanordnung für eine Positionserfassungsvorrichtung nach dem ersten Aspekt der Erfindung einfach und zuverlässig hergestellt werden, so dass auch die vorstehend im Zusammenhang mit der Positionserfassungsvorrichtung des ersten Aspekts der Erfindung beschriebenen Vorteile und Effekte für entsprechende Varianten des Verfahrens des zweiten Aspekts der Erfindung zum Tragen kommen.

Nach einem dritten Aspekt der Erfindung wird die oben genannte Erfindungsaufgabe gelöst durch eine Positionserfassungsvorrichtung zur Erfassung einer Positionsbeziehung zwischen einem ersten Bauteil und einem zweiten Bauteil, insbesondere eine Positionserfassungsvorrichtung nach dem ersten Aspekt der Erfindung, umfassend eine Markierungsanordnung, welche an dem ersten Bauteil vorgesehen ist und eine Absolutspur sowie eine Inkrementalspur aufweist, wobei die Markierungsanordnung durch ein Verfahren nach dem zweiten Aspekt der Erfindung erhältlich ist, und eine Sensoranordnung, welche an dem zweiten Bauteil vorgesehen ist und dafür eingerichtet ist,' die Absolutmarkierungen und die Inkrementalmarkierungen der Markierungsanordnung abzutasten. Die durch das Verfahren des zweiten Aspekts der Erfindung erhältliche Markierungsanordnung weist die erfindungsgemäße Verkettung zweier De-Brujin-Sequenzen der Ordnung N auf, so dass jede mögliche Sequenz der Länge N in der so erhaltenen Absolutcodesequenz genau zweimal auftritt, jeweils für verschiedene Werte der Inkrementalsequenz. Auch die Positionserfassungsvorrichtung des dritten Aspekts ermöglicht somit eine Verdopplung der maximal abtastbaren Wegstrecke entlang der Verschiebung bzw. Verdrehung der beiden Bauteile, insbesondere bei gleichbleibender Länge der Sensoranordnung in Bewegungsrichtung.

Die Erfindung wird nachfolgend anhand bevorzugter Ausführungsbeispiele unter Bezugnahme auf die beigefügten Zeichnungen näher erläutert. Es zeigen:

Figur 1      eine schematische Darstellung einer Positionserfassungsvorrichtung des Stands der Technik;

Figur 2      eine schematische Darstellung einer als Linearencoder ausgebildeten Positionserfassungsvorrichtung nach einem ersten Ausführungsbeispiel der vorliegenden Erfindung;

Figur 3      ein Ablaufdiagramm für ein Verfahren zur Herstellung einer Markierungsanordnung nach einem Ausführungsbeispiel der Erfindung; und

Figur 4      eine schematische Darstellung einer als Rotationsencoder ausgebildeten Positionserfassungsvorrichtung nach einem zweiten Ausführungsbeispiel der Erfindung.

Eine in Figur 2 dargestellte Positionserfassungsvorrichtung eines ersten Ausführungsbeispiels der Erfindung ist ein Linearencoder, welcher eine lineare Verschiebung zwischen einem ersten Bauteil 10 und einem zweiten Bauteil 12 entlang eines geradlinigen Verschiebungswegs X erfasst. Dazu weist die Positionserfassungsvorrichtung eine am ersten Bauteil 10 angebrachte Markierungsanordnung 14 sowie eine am zweiten Bauteil 12 angebrachte Sensoranordnung 16 zum Abtasten der Markierungsanordnung 14 auf. Die Sensoranordnung 16 liest aus der Markierungsanordnung 14 eine Information betreffend die Position der Sensoranordnung 16 entlang der Markierungsanordnung 14.

Die Markierungsanordnung 14 kann eine Absolutspur 18 und eine Inkrementalspur 20 umfassen, welche parallel zum Verschiebungsweg X verlaufen. Entlang der Absolutspur 18 sind eine Vielzahl von Absolutmarkierungen 22 eingerichtet, wobei aus jeder Absolutmarkierung 22 ein 1-Bit-Binärwert, d. h. "1" oder "0", auslesbar ist. Die Vielzahl von Absolutmarkierungen 22 kodieren auf diese Weise eine Absolutcodesequenz B. Im vorliegenden Ausführungsbeispiel kodieren 32 Absolutmarkierungen 22-1,22-2,...,22-32 die Absolutcodesequenz

B= {1, 1,1,0,1,0,0,0,0,1,1,0,0,1,0,1,0,0,0,0,1,1,0,0,1,0,1, 1,1,1,O,1}.

Die Inkrementalspur 20 umfasst eine Vielzahl von entlang des Verschiebungswegs X hintereinander angeordneten Inkrementalmarkierungen 24, wobei jede Inkrementalmarkierung 24 einen 1-Bit-Binärwert, d. h. "1" oder "0", speichert, so dass aus den Inkrementalmarkierungen eine Inkrementalsequenz 1 auslesbar ist. Im Ausführungsbeispiel speichert die Inkrementalspur die alternierende Inkrementalsequenz

I = {1,0,1,0,1,0,1,0,1,0,1,0,1,0,1,0,1,0,1,0,1,0,1,0,1,0,1,0,1,0,1,0}.

Im vorliegenden Ausführungsbeispiel sind die Absolutspur 18 und die Inkrementalspur 20 als magnetisierte Spuren auf einem Magnetband aufgezeichnet, welches entlang des Verschiebungswegs X an dem ersten Bauteil 10 befestigt ist. Alternativ könnten die Absolutspur 18 und die Inkrementalspur 20 auf zwei separaten, parallel verlaufenden Magnetbändern aufgezeichnet sein.

Der Abstand zwischen zwei aufeinanderfolgenden Absolutmarkierungen 22 ist gleich dem Abstand zwischen zwei aufeinanderfolgenden Inkrementalmarkierungen 24 und wird als Polteilung p bezeichnet. Die Polteilung p ist vorzugsweise entlang der Absolutspur 18 bzw. der Inkrementalspur 20 für alle Markierungen konstant. In Verschiebungsrichtung X können die Markierungen 22, 24 zueinander ferner derart ausgerichtet sein, dass neben jeder Absolutmarkierung 22 genau eine dieser Absolutmarkierung 22 zugeordnete Inkrementalmarkierung 24 liegt, d. h. dass die paarweise einander zugeordneten Markierungen 22, 24 entlang des Verschiebungsweges X an der gleichen Position liegen. Die Polteilung p kann insbesondere bei magnetischer Abtastung zwischen ungefähr 1 mm und ungefähr 5 mm liegen.

Die Absolutspur 18 und die Inkrementalspur 20 werden von der Sensoranordnung 16 überfahren. Die Sensoranordnung 16 kann eine Absolutspursensorheit 26 zur gleichzeitigen Erfassung einer vorbestimmten Anzahl von aufeinanderfolgenden Absolutmarkierungen 22, z. B. eine entsprechende Anzahl von ersten Binärwertsensoren 26-1, 26-2, 26-3, 26-4 (in Fig. 2 durch Schraffierung angedeutet), umfassen. Im Ausführungsbeispiel sind vier erste Binärwertsensoren 26-1, 26-2, 26-3, 26-4 zur gleichzeitigen Erfassung von vier aufeinanderfolgenden Absolutmarkierungen 22-17, 22-18, 22-19, 22-20 vorgesehen.

Die Sensoranordnung 16 kann eine Inkrementalspursensoreinheit 28 umfassen, welche dazu eingerichtet ist, sowohl den Binärwert mindestens einer von der Sensoranordnung 16 gerade überfahrenen Inkrementalmarkierung 24 zu erfassen als auch eine Information über eine Relativposition der Sensoranordnung 16 zwischen zwei benachbarten Inkrementalmarkierungen 24 zu erfassen. Dazu kann die Inkrementalspursensoreinheit 28 einen zweiten Binärwertsensor 30 (in Fig. 2 durch Schraffierung angedeutet) zur Auslesung eines Binärwerts ("1" oder "0") aus einer Inkrementalmarkierung 24 aufweisen und kann ferner einen an sich bekannten Inkrementalsensor 32 zur Erfassung der Relativposition oder Zwischenposition zwischen benachbarten Inkrementalmarkierungen 24 aufweisen.

Im Ausführungsbeispiel liest der zweite Binärwertsensor 30 eine Inkrementalmarkierung 24, welche einer der vier Absolutmarkierungen 22-17, 22-18, 22-19, 22-20 zugeordnet ist (zum Beispiel der ganz rechten Absolutmarkierung 22-20), die gerade von der Absolutspursensoreinheit 26 ausgelesen werden.

Bei magnetischer Abtastung können die vorstehend beschriebenen Sensoren oder Sensoreinheiten der Sensoranordnung 16 mindestens einen Hall-Sensor oder eine Anordnung von mehreren Hall-Sensoren umfassen oder können mindestens einen oder mehrere AMR-Sensoren (Sensoren unter Nutzung des anisotropen magnetoresistiven Effekts) umfassen. Ein Inkrementalsensor 32. auf Basis des Hall-Effekts oder des AMR-Effekts kann eine Positionsgenauigkeit (Auflösung) im Bereich von ungefähr $0{,}1\ \mu m$ bis ungefähr $100\ \mu m$ erreichen.

Wie in Figur 2 zu erkennen ist, ist die Absolutcodesequenz B der Absolutspur 18 aus einer Verkettung einer ersten Sequenz B1 der Länge 16 und einer zweiten Sequenz B2 der Länge 16 gebildet, insbesondere aus den Sequenzen

$$B1 = \{1,1,1,0,1,0,0,0,0,1,1,0,0,1,0,1\}$$
$$B2 = \{0,0,0,0,1,1,0,0,1,0,1,1,1,1,0,1\}.$$

Beide Sequenzen B1 und B2 sind De-Brujin Sequenzen der Ordnung 4. Das heißt, dass jede mögliche Binärsequenz aus 4 Bit (also jeder 4-Bit-Binärwert, insgesamt somit $2^4{=}16$ Binärwerte) genau einmal in der ersten De-Brujin Sequenz B1 vorkommt und genau einmal auch in der zweiten De-Brujin Sequenz B2 vorkommt. Dabei ist zu beachten, dass diese Definition der De-Brujin Sequenz von einer zyklischen Lesart der Sequenz ausgeht, also bei Überschreiten des jeweiligen Endes der jeweiligen Sequenz B1, B2 das Auslesen der Sequenz am Anfang der gleichen Sequenz B1 bzw. B2 forgesetzt wird. So enthält zum Beispiel die De-Brujin Sequenz B1 genau einmal die Teilsequenz {0,1,1,0}, nämlich beginnend an der neunten Stelle und endend an der zwölften Stelle, und enthält beispielsweise auch genau einmal die Teilsequenz {0,1,1,1}, nämlich beginnend an der fünfzehnten Stelle und endend an der zweiten Stelle von B1.

Die zweite De-Brujin Sequenz B2 unterscheidet sich von der ersten De-Brujin Sequenz B1 im Ausführungsbeispiel nur dadurch, dass die zweite De-Brujin Sequenz B2 gegenüber der ersten De-Brujin Sequenz B1 zyklisch verschoben ist, hier um fünf Stellen nach links (oder elf Stellen nach rechts).

Die erste De-Brujin Sequenz B1 endet im Ausführungsbeispiel mit einer ersten Untersequenz Ua = {1,0,1} der Länge 3 und enthält eine identische zweite Untersequenz Ub = {1,0,1} der Länge 3 ein zweites Mal, jedoch um elf Stellen nach links gegenüber der ersten Untersequenz Ua versetzt, nämlich an der dritten Stelle. Ferner ist zu erkennen, dass die zweite De-Brujin-Sequenz B2 gegenüber der ersten De-Brujin-Sequenz B1 zyklisch so verschoben ist, dass die zweite De-Brujin-Sequenz B2 gerade mit der zweiten Untersequenz Ub endet, d. h. die zweite De-Brujin-Sequenz B2 ist eine Rechtsverschiebung der ersten De-Brujin-Sequenz B1 um elf Stellen.

Eine Absolutspur 18 mit einer solchen Absolutcodesequenz B erzielt in der Positionserfassungsvorrichtung des Ausführungsbeispiels den folgenden Effekt: Beim Überfahren der Markierungsanordnung 14 erfasst die Absolutsensoreinheit 26 jede mögliche Folge von vier aufeinanderfolgenden 1-Bit-Werten genau zwei Mal. Zum Beispiel sind in Figur 2 mit gestrichelten Linien 12' und 16' das zweite Bauteil 12 und die Sensoranordnung 16 an einer ersten Position illustriert, an welcher die Sensoranordnung 16 die Sequenz {0,0,0,0} aus der Absolutspur 18 zum ersten Mal ausliest, (nämlich aus den Absolutmarkierungen 22-6, 22-7, 22-8, 22-9), während mit durchgezogenen Linien das zweite Bauteil 12 und die Sensoranordnung 16 an einer zweiten Position illustriert sind, an der die Sensoranordnung 16 die Sequenz {0,0,0,0} an anderer Stelle entlang des Verschiebungswegs X zum zweiten Mal aus der Absolutspur 18 ausliest (nämlich aus den Absolutmarkierungen 22-17, 22-18, 22-19, 22-20). Zu erkennen ist, dass die Inkrementalsensoreinheit 28 an den beiden Positionen, an denen die Sequenz {0,0,0,0} auftritt, unterschiedliche Werte für die an diesen Positionen jeweils erfassten Inkrementalmarkierungen 24 liest. Insbesondere zeigt im Ausführungsbeispiel der zweite Binärwertsensor 30 an der ersten Position den Wert "1" und an der zweiten Position den Wert "0". Es wurde festgestellt, dass dieser Effekt für jede mögliche 4-Bit-Folge auftritt, die aus der Absolutspur 18 ausgelesen werden kann, und das Ergebnis der erfindungsgemäßen Ausgestaltung der miteinander verketteten De-Brujin-Sequenz B1 und B2 ist. Die Position der Sensoranordnung 16 (und damit die Positionsbeziehung zwischen den Bauteilen 10, 12 im Genauigkeitsbereich der Polteilung p) kann somit entlang der von ingesamt zwei De-Brujin-Sequenzen B1, B2 überspannten Wegstrecke eindeutig erfasst werden. Zum Beispiel ergibt sich für eine Polteilung p von ungefähr 2 mm (so etwa bei magnetischer Abtastung) eine abtastbare Gesamtlänge L der Absolutspur 18 von ungefähr

$$L = p \cdot 2^{N+1} = 2\ mm \cdot 2^{4+1} = 6{,}4\ cm.$$

Die Positionserfassungsvorrichtung des ersten Ausführungsbeispiels kann ferner eine elektronische Kontrolleinrichtung 34 umfassen, welche mit der Sensoranordnung 16 verbunden ist und von dieser ein erstes Sensorsignal entsprechend dem Erfassungsergebnis der Absolutsensoreinheit 26, ein zweites Sensorsignal entsprechend dem Erfassungsergebnis des zweiten Binärwertsensors 30 sowie ein drittes Sensorsignal entsprechend dem Erfassungsergebnis des Inkrementalsensors 32 empfängt.

Die elektronische Kontrolleinrichtung 34 kann eine Speichereinrichtung 36 umfassen, in welcher ein durch 5 Bit gebildeter Absolutpositionswert gespeichert werden kann, der die Absolutposition der Sensoranordnung 16 entlang der Markierungsanordnung 14 repräsentiert. 4 Bit des in der Speichereinrichtung 36 gespeicherten Absolutpositionswerts spiegeln die von der Absolutsensoreinheit 26 gelesenen Binärwerte der Absolutmarkierungen 22 wider, während 1 Bit des Absolutpositionswerts (im Ausführungsbeispiel das letzte Bit) den von dem zweiten Binärwertsensor 30 gelesenen Binärwert der zugeordneten Inkrementalmarkierung 24 angibt. Der so erhaltene Absolutpositionswert ermöglicht somit eine eindeutige Identifikation der Absolutposition der Sensoranordnung 16 entlang des Verschiebungswegs X. Damit kann eine Positionsbeziehung zwischen den Bauteilen 10, 12 im Genauigkeitsbereich der Polteilung p bestimmt werden.

Die Absolutposition gemäß dem vorstehend beschriebenen 5-Bit-Wert kann ferner mit dem Erfassungsergebnis des Inkrementalsensors 32 kombiniert werden, um zusätzlich eine exakte Position der Sensoranordnung 16 innerhalb der Polteilung zu erfassen, um die exakte Positionsbeziehung der Sensoranordnung 16 entlang des Verschiebungswegs X zu ermitteln.

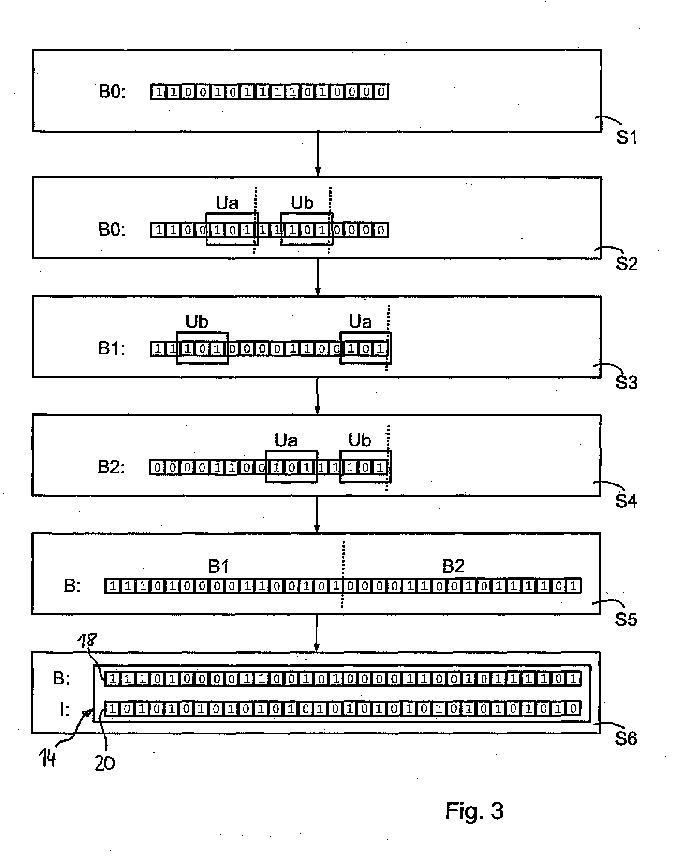

Unter Bezugnahme auf Figur 3 wird nachfolgend eine Ausführungsform eines erfindungsgemäßen Verfahrens zur Herstellung einer Markierungsanordnung für eine Positionserfassungsvorrichtung beschrieben.

In einem ersten Schritt S1 wird eine binäre Initial-De-Brujin-Sequenz B0 der Ordnung N bereitgestellt, wobei die Ordnung N entsprechend der zu erfassenden Gesamtlänge L des Verschiebungswegs gewählt werden kann. Mit einer erfindungsgemäßen Markierungsanordnung kann eine Länge von

$$L = p \cdot 2^{N+1}$$

abgetastet werden, so dass bei gegebener Polteilung p ein Wert N für die Ordnung der Initial-De-Brujin-Sequenz B0 ensprechend der gewünschten Länge L geeignet ausgewählt werden kann.

Für die Berechnung der Initial-De-Brujin-Sequenz B0 kann ein an sich bekanntes Verfahren, insbesondere ein an sich bekannter Computeralgorithmus zur Erzeugung von De-Brujin-Sequenzen (zum Beispiel auf Basis von De-Brujin-Graphen) verwendet werden.

Zur Illustration wird in der nachfolgenden weiteren Beschreibung des Verfahrens des Ausführungsbeispiels beispielhaft von einer Initial-De-Brujin-Sequenz B0 der Ordnung 4 ausgegangen, wobei

$$B0 = \{1,1,0,0,1,0,1,1,1,1,0,1,0,0,0,0\}$$

In einem Schritt S2 werden in der Initial-De-Brujin-Sequenz B0 zwei Untersequenzen Ua, Ub der Länge N-1 identifiziert, welche einander identisch sind und innerhalb der Initial-De-Brujin-Sequenz B0 um eine ungerade Stellenanzahl zueinander versetzt auftreten. Am Beispiel der Initial-De-Brujin-Sequenz vierter Ordnung B0 ist zu erkennen, dass die Untersequenz {1,0,1} ein erstes Mal beginnend an der fünften Stelle und ein zweites Mal beginnend an der zehnten Stelle auftritt, so dass die beiden identischen Untersequenzen Ua = Ub = {1,0,1} zueinander um fünf Stellen versetzt in B0 auftreten.

In einem Schritt S3 wird eine erste De-Brujin-Sequenz B1 der Ordnung N dadurch erhalten, dass die Initial-De-Brujin-Sequenz B0 zyklisch so weit verschoben wird, dass die verschobene Sequenz mit der ersten Untersequenz Ua endet. Mit anderen Worten wird die Initial-De-Brujin-Sequenz B0 nach dem ersten Auftreten der Untersequenz Ua abgeschnitten, und der abgeschnittene Anteil wird am Anfang der Sequenz wieder angefügt, um die erste De-Brujin-Sequenz B1 zu erhalten. Im Ausführungsbeispiel der Initial-De-Brujin-Sequenz B0 der Ordnung 4 wird B0 also nach der ersten Untersequenz Ua, d. h. nach der siebten Stelle, abgeschnitten und die abgeschnittene Teilsequenz (Stellen 8 bis 16 in B0) wird an den Anfang wieder angefügt, so dass die dann erhaltene erste De-Brujin-Sequenz B1 lautet:

$$B1 = \{1,1,1,0,1,0,0,0,0,1,1,0,0,1,0,1\}.$$

Gleichermaßen wird in einem Schritt S4 des Verfahrens eine zweite De-Brujin-Sequenz B2 der Ordnung N durch zyklisches Verschieben der Initial-De-Brujin-Sequenz B0 erhalten, derart, dass die zweite De-Brujin-Sequenz B2 mit der zweiten Untersequenz Ub endet. Im Ausführungsbeispiel wird die De-Brujin-Sequenz der Ordnung 4 nach dem zweiten Auftreten der Untersequenz $\{1,0,1\}$, d. h. nach der zwölften Stelle, abgeschnitten, und die abgeschnittenen Stellen 13 bis 16 werden an den Anfang der Sequenz wieder angefügt, so dass sich die zweite De-Brujin-Sequenz B2 im Ausführungsbeispiel zu

$$B2 = \{0,0,0,0,1,1,0,0,1,0,1,1,1,1,0,1\}$$

ergibt.

In einem Schritt S5 wird anschließend eine Absolutcodesequenz B durch Verketten der ersten De-Brujin-Sequenz B1 und der zweiten De-Brujin-Sequenz B2 erhalten. Die zweite De-Brujin-Sequenz B2 kann unmittelbar folgend an das Ende der ersten De-Brujin-Sequenz B1 angefügt werden. Im Ausführungsbeispiel für N = 4 ergibt sich die Absolutcodesequenz somit zu

$$B = \{ 1,1,1,0,1,0,0,0,0,1,1,0,0,1,0,1,0,0,0,0,1,1,0,0,1,0,1,1,1,1,0,1\}.$$

Die erhaltene Absolutcodesequenz B hat wiederum zyklische Eigenschaft, so dass auch jede zyklische Verschiebung dieser Sequenz B um eine beliebige Stellenanzahl nach links oder rechts wiederum eine erfindungsgemäße Absolutcodesequenz bildet, in der jede Sequenz der Länge N genau zweimal auftritt, jeweils für verschiedene Werte der zugeordneten Inkrementalmarkierungen.

In einem folgenden Schritt S6 wird eine Absolutspur mit einer Mehrzahl von Absolutmarkierungen bereitgestellt, welche die durch die Schritte S1 bis S5 erhaltene Absolutcodesequenz B kodieren. Dazu kann beispielsweise ein Magnetband mit der entsprechenden Codefolge beschrieben werden, etwa mit einem an sich bekannten, elektromagnetischen Schreibkopf, wobei in gleichmäßigen Abständen nach Maßgabe der Polteilung p das Magnetband z. B. senkrecht zur Ebene des Bandes magnetisiert wird. Die binäre Information jedes Pols ("0" oder "1") könnte als Richtungssinn oder Stärke oder Orientierung des jeweiligen Pols auf dem Magnetband gespeichert sein. Insbesondere könnte ein von einer Sensoranordnung erfassbarer Nordpol als Binärwert "1" und ein Südpol als Binärwert "0" definiert werden.

In dem Schritt S6 des Verfahrens des Ausführungsbeispiels wird ferner eine Inkrementalspur aus einer Mehrzahl von den Absolutmarkierungen zugeordneten Inkrementalmarkierungen bereitgestellt, welche eine alternierende Inkrementalsequenz kodieren. Im vorstehend beschriebenen Beispiel für N = 4 mit insgesamt $2^{N+1} = 2^{4+1} = 32$ Absolutmarkierungen kann somit eine Inkrementalsequenz

$$I = \{1,0,1,0,1,0,1,0,1,0,1,0,1,0,1,0,1,0,1,0,1,0,1,0,1,0,1,0,1,0,1,0\}$$

bereitgestellt werden. Die Inkrementalsequenz kann ebenfalls auf dem Magnetband, auf welchem auch die Absolutspur aufgezeichnet ist, oder auf einem weiteren Magnetband aufgezeichnet werden.

Eine durch die Schritte S1 bis S6 erhältliche Markierungsanordnung kann an einem von zwei zueinander beweglichen (verschiebbaren oder drehbaren) Bauteilen befestigt werden, um von einer an dem anderen der beiden Bauteile befestigten Sensoranordnung abgetastet zu werden.

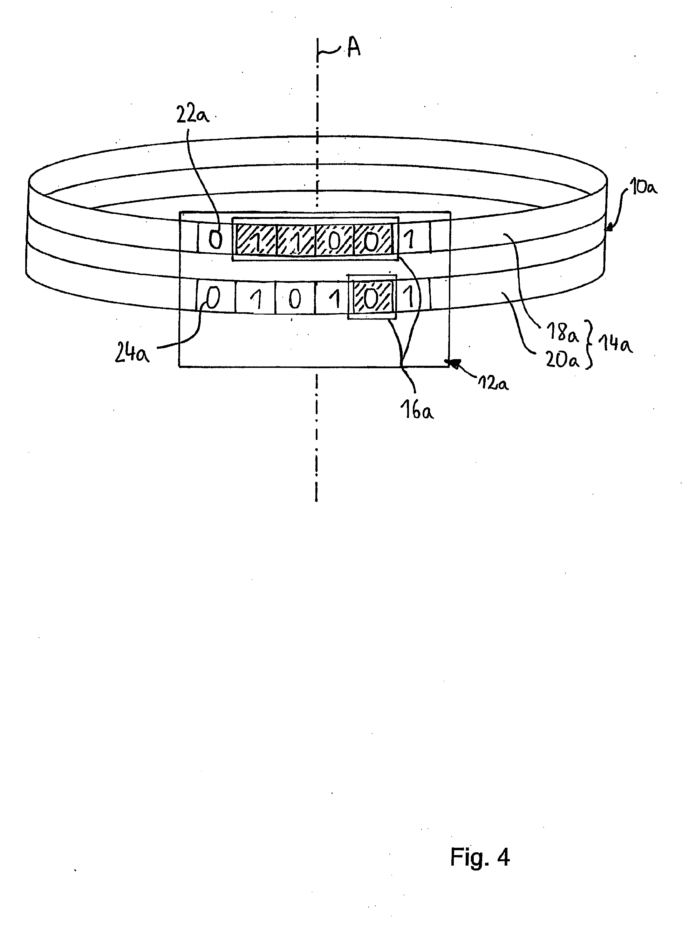

Figur 4 zeigt eine Positionserfassungsvorrichtung gemäß einem zweiten Ausführungsbeispiel der Erfindung, welche als Rotationsencoder ausgebildet ist, um eine Drehstellung eines ersten Bauteils 10a relativ zu einem zweiten Bauteil 12a zu erfassen. Eine Markierungsanordnung 14a kann an dem ersten Bauteil 10a so angebracht sein, dass die Markierungsanordnung 14a eine Drehachse A, um welche die beiden Bauteile 10a, 12a relativ zueinander verdrehbar sind, als Ring konzentrisch umläuft. Im Ausführungsbeispiel weist die Markierungsanordnung 14a zwei parallel zueinander in Umfangsrichtung verlaufende Spuren, eine Absolutspur 18a sowie eine Inkrementalspur 20a, auf. In der Absolutspur 18a in Umfangsrichtung aufeinanderfolgend angeordnete Absolutmarkierungen 22a kodieren eine Absolutcodesequenz, welche in einer oben beschriebenen erfindungsgemäßen Art aus zwei zueinander zyklisch verschobenen De-Brujin-Sequenzen der Ordnung N zusammengesetzt ist. Die Absolutspur enthält somit $2^{N+1}$ Absolutmarkierungen 22a.

Analog dem im Zusammenhang mit dem ersten Ausführungsbeispiel erläuterten Prinzip kann auch die Absolutspur 18a des Rotationsencoders des zweiten Ausführungsbeispiels der Erfindung durch eine an dem zweiten Bauteil 12a angeordnete Sensoranordnung 16a abgetastet werden, wobei bei einer technischen Auslegung der Sensoranordnung 16a für das Auslesen von N Absolutmarkierungen (beispielsweise durch vier erste Binärwertsensoren der Sensoranordnung 16a) eine Absolutspur mit insgesamt $2^{N+1}$ Absolutmarkierungen 22a abgetastet werden kann, was einer Verdopplung des abtastbaren Gesamtwinkels gegenüber dem aus dem Stand der Technik bekannten Prinzip der Abtastung von nur einer De-Brujin-Sequenz der Ordnung N entspricht.

Hinsichtlich der Abtastung der Inkrementalspur sowie der Verarbeitung der von der Sensoranordnung 16a erfassten Werte zur Ermittlung einer genauen Positionsbeziehung zwischen den beiden Bauteilen 10a, 12a wird ausdrücklich auf die vorstehende Beschreibung des ersten Ausführungsbeispiels verwiesen. Die dort beschriebenen konstruktiven Maßnahmen und Funktionen sind in gleicher oder entsprechender Weise auch auf das zweite Ausführungsbeispiel anwendbar und erzielen dort gleiche oder entsprechende technische Effekte.

Besonders vorteilhaft kann die Absolutspur 18a des Rotationsencoders des zweiten Ausführungsbeispiels das erste Bauteil 10a vollständig umlaufen, d. h. als geschlossener zur Drehachse A konzentrischer Ring, so dass die erste Absolutmarkierung 22a, welche das erste Bit der Absolutcodesequenz B speichert, unmittelbar an die letzte Absolutmarkierung 22a, welche das letzte Bit der Absolutcodesequenz B speichert, anschließt. Bei dieser Ausgestaltung kann besonders vorteilhaft die zyklische Eigenschaft der Absolutcodesequenz B ausgenutzt werden, so dass auch ohne definierten Anfangs- oder Endpunkt der Absolutcodesequenz jede Folge von N aufeinanderfolgenden Bits entlang des Umfangs des ersten Bauteils 10a, d. h. bei jeder vollständigen Umdrehung des ersten Bauteils 10a, genau zwei Mal auftritt, jeweils für verschiedene Werte zugeordneter Inkrementalmarkierungen 24a. Aus der von der Absolutspur 18a ausgelesenen N-Bit-Folge (4-Bit-Folge im Ausführungsbeispiel) sowie dem Wert der zugehörigen Inkrementalmarkierung 24a kann somit die Drehstellung zwischen den Bauteilen 10a, 12a eindeutig bestimmt werden.

Gegebenenfalls kann zusätzlich eine exakte Positionsbestimmung zwischen benachbarten Absolutmarkierungen 22a durch Auswertung eines weiteren Inkrementalsensors erfolgen, wie an sich im Stand der Technik bekannt ist.

Alternativ könnte die Markierungsanordnung 14a das Bauteil 10a auch nur entlang eines Abschnitts, insbesondere eines Kreisabschnitts um die Drehachse A, umlaufen oder/und die Drehachse A könnte außerhalb des ersten Bauteils 10a angeordnet sein, solange bei einer Relativbewegung zwischen erstem und zweitem Bauteil 10a, 12a die Sensoranordnung 16a entlang der Markierungsanordnung 14a bewegt wird und diese abtasten kann.

Die vorliegende Erfindung ist nicht auf die beschriebenen Ausführungsbeispiele beschränkt, sondern umfasst weitere Ausführungsformen im Rahmen der Ansprüche. Insbesondere kann die Abtastung der Markierungsanordnung auf einer optischen Signalerfassung basieren, wobei die Markierungsanordnung optisch abtastbare Markierungen als Absolutmarkierungen bzw. Inkrementalmarkierungen umfassen kann (beispielsweise einen Strichcode oder ein Punktraster) und wobei die Sensoranordnung die Markierungen mittels eines Laserstrahls und eines optischen Detektores abtasten kann. Eine optische Abtastung bietet sich insbesondere für die Abtastung kleinerer Verschiebungswege mit besonders hoher Genauigkeit an.

**Patentansprüche**

1. Positionserfassungsvorrichtung zur Erfassung einer Positionsbeziehung zwischen einem ersten Bauteil (10; 10a) und einem zweiten Bauteil (12; 12a), umfassend:

   - eine Markierungsanordnung (14; 14a), welche an dem ersten Bauteil (10; 10a) vorgesehen ist und eine Absolutspur (18; 18a) sowie eine Inkrementalspur (20; 20a) aufweist, wobei die Absolutspur (18; 18a) eine Mehrzahl von Absolutmarkierungen (22; 22a) aufweist, aus denen eine binäre Absolutcodesequenz (B) auslesbar ist, und wobei die Inkrementalspur (20; 20a) eine Mehrzahl von den Absolutmarkierungen (22; 22a) zugeordneten Inkrementalmarkierungen (24; 24a) aufweist, aus denen eine alternierende Inkrementalsequenz (I) auslesbar ist, und
   - eine Sensoranordnung (16; 16a), welche an dem zweiten Bauteil (12; 12a) vorgesehen ist und dafür eingerichtet ist, die Absolutmarkierungen (22; 22a) und die Inkrementalmarkierungen (24; 24a) abzutasten,

**dadurch gekennzeichnet, dass** die Absolutcodesequenz (B) aus einer ersten und einer zweiten De-Bruijn-Sequenz (B1, B2) der Ordnung N gebildet ist, welche aufeinanderfolgen, wobei die zweite De-Bruijn-Sequenz (B2) eine zyklische Verschiebung der ersten De-Bruijn-Sequenz (B1) ist,

dass die erste De-Bruijn-Sequenz (B1) mit einer ersten Untersequenz (Ua) der Länge N-1 endet und eine zur ersten Untersequenz (Ua) identische, zweite Untersequenz (Ub) der Länge N-1 enthält, welche zur ersten Untersequenz (Ua) um eine ungerade Stellenanzahl versetzt ist,

dass die zweite De-Bruijn-Sequenz (B2) gegenüber der ersten De-Bruijn-Sequenz (B1) zyklisch so verschoben ist, dass sie mit der zweiten Untersequenz (Ub) endet.

2. Positionserfassungsvorrichtung nach Anspruch 1,
**gekennzeichnet durch** eine elektronische Kontrolleinrichtung (30),
welche mit der Sensoranordnung (16; 16a) in Verbindung steht, um ein erstes Sensorsignal entsprechend einer Abtastung der Absolutspur (18; 18a), ein zweites Sensorsignal entsprechend einer Abtastung der Inkrementalspur (20; 20a) und ein drittes Sensorsignal entsprechend einer erfassten Relativposition zwischen zwei aufeinanderfolgenden Inkrementalmarkierungen (24; 24a) zu empfangen, und
welche dafür eingerichtet ist, die Positionsbeziehung zwischen den Bauteilen (10, 12; 10a, 12a) auf Grundlage des ersten Sensorsignals, des zweiten Sensorsignals und des dritten Sensorsignals zu bestimmen.

3. Positionserfassungsvorrichtung nach Anspruch 2,
**dadurch gekennzeichnet, dass** die elektronische Kontrolleinrichtung (30) eine Speichereinrichtung (32) umfasst, in welcher ein durch N+1 Bits gebildeter Absolutpositionswert gespeichert ist,
wobei die elektronische Kontrolleinrichtung (30) N Bits des Absolutpositionswerts nach Maßgabe des ersten Sensorsignals setzt und ein Bit des Absolutpositionswerts nach Maßgabe des zweiten Sensorsignals setzt.

4. Positionserfassungsvorrichtung nach einem der vorhergehenden Ansprüche,
**dadurch gekennzeichnet, dass** die Sensoranordnung (16; 16a) zur Erfassung von genau N aufeinanderfolgenden Absolutmarkierungen (22; 22a) eingerichtet ist.

5. Positionserfassungsvorrichtung nach einen der vorhergehenden Ansprüche,
**dadurch gekennzeichnet, dass** die Abtastung der Markierungsanordnung (14; 14a) auf einer magnetischen Wechselwirkung zwischen der Sensoranordnung (16; 16a) und den Absolutmarkierungen (22; 22a) oder/und den Inkrementalmarkierungen (24; 24a) basiert.

6. Positionserfassungsvorrichtung nach einem der vorhergehenden Ansprüche,
**dadurch gekennzeichnet, dass** die Positionserfassungsvorrichtung zur Erfassung einer linearen Verschiebungsposition zwischen den Bauteilen (10, 12) eingerichtet ist.

7. Positionserfassungsvorrichtung nach einem der vorhergehenden Ansprüche,
**dadurch gekennzeichnet, dass** die Positionserfassungsvorrichtung zur Erfassung einer Drehposition zwischen den Bauteilen (10a, 12a) eingerichtet ist.

8. Positionserfassungsvorrichtung nach Anspruch 7,
**dadurch gekennzeichnet, dass** die Absolutspur (18a) und die Inkrementalspur (20a) eine Drehachse A der Bauteile (10a, 12a) vollständig umlaufen, wobei ein Anfang der zweiten De-Bruijn-Sequenz (B2) an ein Ende der ersten De-Bruijn-Sequenz (B1) angrenzt und ein Anfang der ersten De-Bruijn-Sequenz (B1) an ein Ende der zweiten De-Bruijn-Sequenz (B2) angrenzt.

9. Verfahren zur Herstellung einer Markierungsanordnung (14; 14a) für eine Positionserfassungsvorrichtung zur Erfassung einer Positionsbeziehung zwischen einem ersten Bauteil (10; 10a) und einem zweiten Bauteil (12; 12a), wobei die Positionserfassungsvorrichtung eine Sensoranordnung (16; 16a) zum Abtasten der Markierungsanordnung (14; 14a) aufweist, insbesondere für eine Positionserfassungsvorrichtung nach einem der vorhergehenden Ansprüche,
wobei das Verfahren die Schritte umfasst:

    - Bereitstellen einer Initial-De-Bruijn-Sequenz (B0) der Ordnung N (S1),
    - Identifizieren einer ersten Untersequenz (Ua) der Länge N-1 und einer zweiten Untersequenz (Ua) der Länge N-1, welche einander identisch sind und innerhalb der Initial-De-Bruijn-Sequenz (B0) um eine ungerade Stellenanzahl zueinander versetzt auftreten (S2),

- Bereitstellen einer ersten De-Bruijn-Sequenz (B1) der Ordnung N durch zyklisches Verschieben der Initial-De-Bruijn-Sequenz (B0), so dass die erste De-Bruijn-Sequenz (B1) mit der ersten Untersequenz (Ua) endet (S3),
- Bereitstellen einer zweiten De-Bruijn-Sequenz (B2) der Ordnung N durch zyklisches Verschieben der Initial-De-Bruijn-Sequenz (B0), so dass die zweiten De-Bruijn-Sequenz (B2) mit der zweiten Untersequenz (Ub) endet (S4),
- Bereitstellen einer Absolutcodesequenz (B) durch Verketten der ersten De-Bruijn-Sequenz (B1) und der zweiten De-Bruijn-Sequenz (B2) (S5),
- Bereitstellen einer Absolutspur (18; 18a) aus einer Mehrzahl von die Absolutcodesequenz (B) codierenden Absolutmarkierungen (S6; 22; 22a), und
- Bereitstellen einer Inkrementalspur (20; 20a) aus einer Mehrzahl von den Absolutmarkierungen (22; 22a) zugeordneten Inkrementalmarkierungen (24; 24a), welche eine alternierende Inkrementalsequenz (I) codieren (S6).

**Claims**

1. Position detecting device for detecting a positional relationship between a first component (10; 10a) and a second component (12; 12a), comprising:

   - a marking arrangement (14; 14a) which is provided on the first component (10; 10a) and has an absolute track (18; 18a) and an incremental track (20; 20a), the absolute track (18; 18a) having a plurality of absolute markings (22; 22a) from which a binary absolute code sequence (B) can be read, and the incremental track (20; 20a) having a plurality of incremental markings (24; 24a) which are associated with the absolute markings (22; 22a) and from which an alternating incremental sequence (I) can be read, and
   - a sensor arrangement (16; 16a) which is provided on the second component (12; 12a) and is configured to scan the absolute markings (22; 22a) and the incremental markings (24; 24a),
   **characterised in that** the absolute code sequence (B) is formed from a first and a second De Bruijn sequence (B1, B2) of order N, which follow one another, the second De Bruijn sequence (B2) being a cyclic shift of the first De Bruijn sequence (B1),
   **in that** the first De Bruijn sequence (B1) ends with a first subsequence (Ua) of length N-1 and contains a second subsequence (Ub) of length N-1, which is identical to the first subsequence (Ua) and is shifted relative to the first subsequence (Ua) by an uneven number of places,
   **in that** the second De Bruijn sequence (B2) is shifted cyclically relative to the first De Bruijn sequence (B1) such that it ends with the second subsequence (Ub).

2. Position detecting device according to claim 1,
   **characterised by** an electronic control means (30) which is connected to the sensor arrangement (16; 16a) to receive a first sensor signal corresponding to a scanning of the absolute track (18; 18a), a second sensor signal corresponding to a scanning of the incremental track (20; 20a) and a third sensor signal corresponding to a detected relativ position between two successive incremental markings (24; 24a), and which is configured to determine the positional relationship between the components (10, 12; 10a, 12a) on the basis of the first sensor signal, the second sensor signal and the third sensor signal.

3. Position detecting device according to claim 2,
   **characterised in that** the electronic control means (30) comprises a memory means (32) in which an absolute position value, formed by N+1 bits, is stored, the electronic control means (30) setting N bits of the absolute position value according to the first sensor signal and setting one bit of the absolute position value according to the second sensor signal.

4. Position detecting device according to any of the preceding claims, **characterised in that** the sensor arrangement (16; 16a) is configured to detect exactly N successive absolute markings (22; 22a).

5. Position detecting device according to any of the preceding claims, **characterised in that** the scanning of the marking arrangement (14; 14a) is based on a magnetic interaction between the sensor arrangement (16; 16a) and the absolute markings (22; 22a) and/or the incremental markings (24; 24a).

6. Position detecting device according to any of the preceding claims,
   **characterised in that** the position detecting device is configured to detect a linear displacement position between the components (10, 12).

7. Position detecting device according to any of the preceding claims,
**characterised in that** the position detecting device is configured to detect a rotational position between the components (10a, 12a).

8. Position detecting device according to claim 7,
**characterised in that** the absolute track (18a) and the incremental track (20a) revolve fully about an axis of rotation A of the components (10a, 12a), a beginning of the second De Bruijn sequence (B2) adjoining an end of the first De Bruijn sequence (B1) and a beginning of the first De Bruijn sequence (B1) adjoining an end of the second De Bruijn sequence (B2).

9. Method for producing a marking arrangement (14; 14a) for a position detecting device for detecting a positional relationship between a first component (10; 10a) and a second component (12; 12a), the position detecting device comprising a sensor arrangement (16; 16a) for scanning the marking arrangement (14; 14a), in particular for a position detecting device according to any of the preceding claims, the method comprising the following steps:

- providing an initial De Bruijn sequence (B0) of order N (S1),
- identifying a first subsequence (Ua) of length N-1 and a second subsequence (Ub) of length N-1, which are identical to one another and occur within the initial De Bruijn sequence (B0), shifted relative to one another by an uneven number of places (S2),
- providing a first De Bruijn sequence (B1) of order N by cyclically shifting the initial De Bruijn sequence (B0) so that the first De Bruijn sequence (B1) ends with the first subsequence (Ua) (S3),
- providing a second De Bruijn sequence (B2) of order N by cyclically shifting the initial De Bruijn sequence (B0) so that the second De Bruijn sequence (B2) ends with the second subsequence (Ub) (S4),
- providing an absolute code sequence (B) by linking the first De Bruijn sequence (B1) and the second De Bruijn sequence (B2) (S5),
- providing an absolute track (18; 18a) from a plurality of absolute markings (S6; 22; 22a) encoding the absolute code sequence (B), and
- providing an incremental track (20; 20a) from a plurality of incremental markings (24; 24a) which are associated with the absolute markings (22; 22a) and encode an alternating incremental sequence (I) (S6).

**Revendications**

1. Dispositif de détection de position pour la détection d'une relation de position entre un premier composant (10; 10a) et un deuxième composant (12; 12a), comprenant:

- un agencement de marquage (14; 14a), qui est prévu sur le premier composant (10; 10a) et qui présente une piste absolue (18; 18a) ainsi qu'une piste incrémentielle (20; 20a), dans lequel la piste absolue (18; 18a) présente une multiplicité de marquages absolus (22; 22a), à partir desquels une séquence de codes absolue binaire (B) peut être lue, et dans lequel la piste incrémentielle (20; 20a) présente une multiplicité de marquages incrémentiels (24; 24a) associés aux marquages absolus (22; 22a), à partir desquels une séquence incrémentielle alternée (I) peut être lue, et
- un agencement de détecteurs (16; 16a), qui est prévu sur le deuxième composant (12; 12a) et qui est conçu pour balayer les marquages absolus (22; 22a) et les marquages incrémentiels (24; 24a),
**caractérisé en ce que** la séquence de codes absolue (B) est formée d'une première et d'une deuxième séquences de De Bruijn (B1, B2) d'ordre N, qui se succèdent, dans lequel la deuxième séquence de De Bruijn (B2) est un déplacement cyclique de la première séquence de De Bruijn (B1),
**en ce que** la première séquence de De Bruijn (B1) se termine avec une première sous-séquence (Ua) de longueur N-1 et contient une deuxième sous-séquence (Ub) de longueur N-1, identique à la première sous-séquence (Ua), et qui est décalée d'un nombre impair de positions par rapport à la première sous-séquence (Ua),
**en ce que** la deuxième séquence de De Bruijn (B2) est déplacée cycliquement par rapport à la première séquence de De Bruijn (B1) d'une manière telle qu'elle se termine avec la deuxième sous-séquence (Ub).

2. Dispositif de détection de position selon la revendication 1, **caractérisé par** un dispositif de contrôle électronique (30), qui est en liaison avec l'agencement de détecteurs (16; 16a), pour recevoir un premier signal de détecteur correspondant à un balayage de la piste absolue (18; 18a), un deuxième signal de détecteur correspondant à un balayage de la piste incrémentielle (20; 20a), et un troisième signal de détecteur correspondant à une position relative détectée entre deux marquages incrémentiels successifs (24; 24a), et

qui est conçu pour déterminer la relation de position entre les composants (10, 12; 10a, 12a) sur la base du premier signal de détecteur, du deuxième signal de détecteur et du troisième signal de détecteur.

3. Dispositif de détection de position selon la revendication 2, **caractérisé en ce que** le dispositif de contrôle électronique (30) comprend un dispositif de mémoire (32), dans lequel une valeur de position absolue formée par N+1 bits est mémorisée,

dans lequel le dispositif de contrôle électronique (30) pose N bits conformément au premier signal de détecteur et pose un bit de la valeur de position absolue conformément au deuxième signal de détecteur.

4. Dispositif de détection de position selon l'une quelconque des revendications précédentes, **caractérisé en ce que** l'agencement de détecteurs (16; 16a) est conçu pour la détection exactement de N marquages absolus successifs (22; 22a).

5. Dispositif de détection de position selon l'une quelconque des revendications précédentes, **caractérisé en ce que** le balayage de l'agencement de marquage (14; 14a) est basé sur une interaction magnétique entre l'agencement de détecteurs (16; 16a) et les marquages absolus (22; 22a) ou/et les marquages incrémentiels (24; 24a).

6. Dispositif de détection de position selon l'une quelconque des revendications précédentes, **caractérisé en ce que** le dispositif de détection de position est conçu pour la détection d'une position de déplacement linéaire entre les composants (10, 12).

7. Dispositif de détection de position selon l'une quelconque des revendications précédentes, **caractérisé en ce que** le dispositif de détection de position est conçu pour la détection d'une position rotative entre les composants (10a, 12a).

8. Dispositif de détection de position selon la revendication 7, **caractérisé en ce que** la piste absolue (18a) et la piste incrémentielle (20a) encerclent entièrement un axe de rotation A des composants (10a, 12a), dans lequel un début de la deuxième séquence de De Bruijn (B2) jouxte une fin de la première séquence de De Bruijn (B1) et un début de la première séquence de De Bruijn (B1) jouxte une fin de la deuxième séquence de De Bruijn (B2).

9. Procédé de fabrication d'un agencement de marquage (14; 14a) pour un dispositif de détection de position pour la détection d'une relation de position entre un premier composant (10; 10a) et un deuxième composant (12; 12a), dans lequel le dispositif de détection de position présente un agencement de détecteurs (16; 16a) pour balayer l'agencement de marquage (14; 14a), en particulier pour un dispositif de détection de position selon l'une quelconque des revendications précédentes, dans lequel le procédé comprend les étapes suivantes :

- préparer une séquence de De Bruijn initiale (B0) d'ordre N (S1),
- identifier une première sous-séquence (Ua) de longueur N-1 et une deuxième sous-séquence (Ub) de longueur N-1, qui sont identiques l'une à l'autre et qui sont décalées l'une par rapport à l'autre d'un nombre impair de positions à l'intérieur de la séquence de De Bruijn initiale (B0) (S2),
- préparer une première séquence de De Bruijn (B1) d'ordre N par déplacement cyclique de la séquence de De Bruijn initiale (B0), de telle manière que la première séquence de De Bruijn (B1) se termine avec la première sous-séquence (Ua) (S3),
- préparer une deuxième séquence de De Bruijn (B2) d'ordre N par déplacement cyclique de la séquence de De Bruijn initiale (B0), de telle manière que la deuxième séquence de De Bruijn (B2) se termine avec la deuxième sous-séquence (Ub) (S4),
- préparer une séquence de codes absolue (B) par enchaînement de la première séquence de De Bruijn (B1) et de la deuxième séquence de De Bruijn (B2) (S5),
- préparer une piste absolue (18; 18a) à partir d'une multiplicité de marquages absolus (S6; 22; 22a) codant la séquence de codes absolue (B), et
- préparer une piste incrémentielle (20; 20a) à partir d'une multiplicité de marquages incrémentiels (24; 24a) associés aux marquages absolus (22; 22a), et qui codent une séquence incrémentielle alternée (I) (S6).

**Fig. 1**
**(Stand der Technik)**

**Fig. 2**

Fig. 3

Fig. 4